(19) Europäisches Patentamt
European Patent Office
Office européen des brevets

(11) EP 0 431 656 B1

(12) **EUROPEAN PATENT SPECIFICATION**

(45) Date of publication and mention of the grant of the patent:
**13.03.1996 Bulletin 1996/11**

(51) Int Cl.[6]: **C08F 220/14**

(21) Application number: **90202881.0**

(22) Date of filing: **30.10.1990**

(54) **Interpolymer latices from esters of (meth)acrylic acid and vinyl esters of branched chain carboxylic acids**

Latices von Copolymeren von (Meth-)Acrylsäureestern und Vinylestern verzweigter Carboxylsäuren

Latices de copolymères d'esters d'acide (meth)acrylique et d'esters vinyliques d'acides carboxyliques ramifiés

(84) Designated Contracting States:
**BE CH DE ES FR GB IT LI NL SE**

(30) Priority: **06.11.1989 GB 8924984**

(43) Date of publication of application:
**12.06.1991 Bulletin 1991/24**

(73) Proprietor: **SHELL INTERNATIONALE RESEARCH MAATSCHAPPIJ B.V.**
**NL-2596 HR Den Haag (NL)**

(72) Inventors:
- **Scholten, Henricus Paulus Hubertus**
  **B-1000 Brussels (BE)**
- **Slinckx, Martine Madeleine Christiane Pierre**
  **B-1000 Brussels (BE)**
- **Sonderman, Marc Stephen**
  **B-1000 Brussels (BE)**
- **Vermeulen, Jan**
  **B-1000 Brussels (BE)**

(56) References cited:
**EP-A- 0 071 070** **EP-A- 0 315 278**
**GB-A- 967 479** **GB-A- 1 145 546**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 431 656 B1

## Description

This invention relates to interpolymers of esters of (meth)acrylic acid and vinyl esters of branched chain carboxylic acids, to latices containing such interpolymers, to the preparation of such interpolymers, to coating compositions comprising such latices and to solid polymeric products, for example redispersable latex powders formed by drying of such latices.

British patent specification No. 967,479 actually discloses a method for the preparation of a stable latex comprising copolymerizing a monomer mixture containing

(1) a vinyl ester of saturated aliphatic monocarboxylic acids in which the carboxyl groups are attached to tertiary and/or quaternary carbon atoms,
(2) an alkyl ester of a polymerizable alpha,beta-ethylenically unsaturated carboxylic acid, and
(3) from 0.5 to 5% by weight of total monomer of an alpha,- beta-ethylenically unsaturated carboxylic acid,
in an aqueous emulsion at a temperature between 0 °C and 90 °C and using a free radical initiator.

More particularly in the examples I-IX monomer premix compositions are used as starting materials which comprise as sole alkyl ester of alpha,beta-ethylenically unsaturated carboxylic acid component ethyl acrylate or propyl acrylate or methyl methacrylate, whereas as the vinyl ester of saturated branched aliphatic monocarboxylic acid component, inter alia mixtures of several carboxylic acids are applied, which contain from 7-19 carbon atoms.

Moreover in page 3 and in claim 8 of this publication as preferred combination of starting monomers has been mentioned, that of ethyl acrylate and vinyl pivalate with methacrylic acid in proportions from 60-82 parts of ethyl acrylate, from 17-39 parts vinyl pivalate and from 1-3 parts of methacrylic acid respectively.

This process has been found to provide only insufficient polymerisation yields, so that the latices obtained are still containing a substantial amount of residual monomers. The presence of free monomers in the latices is considered disadvantageous. These free monomers are substantially contributing to the odour of the latices and latex powders, cause a deleterious effect on latex stability and in the context of coating applications have shown a deleterious effect on the hardness, outdoor durability and blocking resistance of films formed by drying of the latices.

Further from the point of view of toxicity it is desirable to minimize free monomers.

Several efforts were made in the past to improve these polymerization yields as well as the properties of the finally formed film after drying the latices, e.g. included in coating compositions.

U.S. patent No. 4,397,984 discloses an aqueous paper coating composition, which essentially comprises a finely divided pigment and an emulsion copolymer of

(a) from 30 to 80% by weight of alkyl acrylates or mixtures of such compounds and di(alkyl)maleates, the alkyl group in which containing from 4 to 8 carbon atoms;
(b) from 8 to 30% by weight of acrylic acid and/or methacrylic acid;
(c) from 0 to 50% by weight of vinyl propionate vinyl acetate, methyl acrylate, ethyl acrylate and/or vinyl $\alpha$-branched monocarboxylate, containing 10 carbon atoms in the carboxylic acid residue;
(d) from 0 to 5% by weight of acrylamide, methacrylamide, vinylsulphonic acid, 2-acrylamido-2-methylpropanesulphonic acid and/or acrylonitrile; and
(e) from 0 to 3% by weight of crosslinking monomers, in the form of an aqueous dispersion, as the sole binder or thickener.

Moreover an acceptable conversion degree close to the theoretically expected yield of the polymerization could not be obtained, which causes the hereinbefore mentioned unattractive coating film properties and toxicity.

Moreover, it is still a generally existing conception under persons skilled in the art that alkyl methacrylates and/or alkyl acrylates and vinyl esters with a large branched carbon chain are extremely difficult to copolymerize into a substantially random copolymer due to a large difference in reactivity of the respective monomers. Therefore the copolymerization of monomer pairs to a polymer dispersion at lower temperatures showing attractive properties of the coating films, has been regarded as rather difficult or even impossible as can be derived from e.g. VeoVa Technical Manual VM 2.1, pages 7 and 8, Technical Bulletin, issued June, 1988 (VeoVa is a trademark).

Said conception also could be derived from the lectures held during ATIPIC Meeting Louvain-la-Neuve, Belgium, September 11, 1989 and during NVVT Meeting, Rotterdam, the Netherlands, May 23, 1989.

In addition, the theoretically expected yield cannot be reached because some of the monomer does not polymerize and give rise to the hereinbefore mentioned unattractive properties.

GB-A-1,145,546 discloses copolymers comprising hydroxyl groups which are prepared from the following monomers:

a) methylmethacrylate,
b) C4-18 alkylacrylate,
c) vinyl esters of the general formula as indicated, such as the versatic 911 vinyl ester,
d) a copolymerisable alpha,beta-ethylenically unsaturated monocarboxylic acid and e) hydroxyalkyl or hydroxyaralkylester of an unsaturated acid. These copolymers are evidently intended for use in combination with a second compatible resinous compound to form coating compositions that require curing at temperatures above 100 °C in order to obtain films with favourable properties. Furthermore the copolymers of GB-A-1,145,546 are prepared by polymerisation of the monomers in an organic solvent and are intended for use in heat cure coating compositions comprising organic solvents, which is evident from line 35 on page 4 to line 16 on page 5 of GB-A-1,145,546. Evidently GB-A-1,145,546 does not relate to a process for the preparation of interpolymer containing latices, nor to latices comprising interpolymers nor to interpolymers suitable for use in latices.

Due to a growing need of environmentally friendly aqueous coatings having more attractive properties, and/or obtained by a more reliable and efficient copolymerization, intensive further research effort was directed to the development of latices containing an interpolymer of vinyl acetate and vinyl esters of one or more tertiary carboxylic acid(s). Such interpolymers containing latices are known to show acceptable properties for use in coating applications. Known embodiments of such copolymer compositions are used as bases for matt and silk finish emulsion paints, as such or when dried to form latex powders, in mortar mixes, as is known from e.g. European patent application No. 315278, US patent No. 3,654,209.

Due to modern coating industry requirements such interpolymer compositions appeared to have to be further improved in respect of mechanical properties, chemical resistance and water resistance of the finally obtained coating film after drying coating compositions, containing these interpolymers.

More particularly, it will be appreciated that there is a strong need to improve the properties of latices further in order to meet the requirements of glossy emulsion paints and anticorrosion paints. Moreover there is a need for an efficient, and reliable process for the preparation of such latices, in order to enable the manufacture via an economically attractive way.

As result of extensive research and experimentation there were surprisingly found such interpolymer compositions aimed at, showing a very attractive combination of properties such as high monomer conversion and freeze-thaw stability of the latex, and chemical stability, alkali resistance, light resistance and flexibility and more particularly UV-resistance, and water resistance of latex film.

Accordingly a group of interpolymers is provided characterized in that they are derivable from a starting comonomer mixture consisting of

(a) methyl methacrylate;
(b) butylacrylate;
(c) the vinyl ester of Versatic 9 acid (registered trade mark), representing a tertiary aliphatic carboxylic acid, in which the acid moiety contains 9 carbon atoms, optionally mixed with at most 30% by weight (of any mixture of Versatic acid vinyl esters) of the vinylester of Versatic 10 acid representing a tertiary aliphatic carboxylic acid in which the acid moiety contains 10 carbon atoms in its acid residue,
(d) a stabilizing monomer, selected from the group comprising acrylic acid, methacrylic acid, acrylamide, methacrylamide, diacetone acrylamide and sodium vinyl sulphonate and mixtures thereof, of which acrylic acid or acrylamide are the most preferred, in an amount of from 0.5 to 5% by weight relative to the total weight of monomers,

wherein the respective weight percentages of the components (a), (b) and (c), being calculated relative to the total weight of the sum of the amounts of these components, are simultaneously fulfilling the following equations, each describing compositions having equal performance contour lines in a triangle diagram:

$$\text{(I)}\qquad T_g = 112X_1 - 44X_2 + 50X_3 - 76X_1.X_2 - 108X_1.X_3 - 52X_2.X_3 - 3X_1.X_2.X_3$$

$$\text{(II)}\qquad WA = a_1X_1 + a_2X_2 + a_3X_3 + a_4X_1.X_2 + a_5X_1.X_3 + a_6X_2.X_3 + a_7X_1.X_2.X_3$$

$$\text{(III)}\qquad WS = b_1X_1 + b_2X_2 + b_3X_3 + b_4X_1.X_2 + b_5X_1.X_3 + b_6X_2.X_3 + b_7X_1.X_2.X_3$$

wherein $T_g$ represents the glass transition temperature having a value in the range of from -10 °C to 50 °C, wherein WA represents the water absorption value being at most 30% m/m, measured as specified hereinafter, wherein WS represents the water spot value being at least 7, after 24 hours, as specified hereinafter, wherein $X_1$ represents the weight percentage of component (a), $X_2$ represents the weight percentage of component (b) and wherein $X_3$ represents the weight percentage of component (c), the values of each of $X_1$, $X_2$ and $X_3$ being in the range of from 5% to 95%, calculated on the total weight of components (a), (b) and (c).

According to a preferred embodiment of the present invention, interpolymers are provided, which are derivable from the components (a)-(d), wherein the component (d) is consisting of acrylic acid in an amount of 0.5-2% by weight and more preferably about 1% by weight.

It will be appreciated by a person skilled in the art that starting comonomer compositions containing monomers (a), (b) and (c) in proportions meeting the beforementioned equations IV-VI, are represented by the shaded area in figure 1.

With the term "minor amount of vinyl ester of Versatic 10 acid", as used throughout this specification, is meant that at most 30% by weight of any mixture of Versatic acid vinyl esters, will be formed by Versatic 10 acid vinyl ester, and preferably less than 10% by weight and more preferably less than 5% by weight, calculated on the total weight of such a vinyl ester mixture.

As vinyl esters of Versatic 9, optionally mixed with vinyl esters of Versatic 10 acid, preferably VeoVa 9 (trade mark), optionally mixed with VeoVa 10 (trade mark), is used.

A more preferred group of those interpolymers are derivable from comonomer mixtures, wherein the weight fractions of these components (a'), (b') and (c') simultaneously fulfil the equations, IV-VI, each describing compositions having equal performance contour lines in a triangle diagram:

$$\text{(VII)} \quad T_g' = 112X_1' - 44X_2' + 50X_3' - 76X_1'.X_2' - 108X_1'.X_3' - 52X_2'.X_3' + 3X_1'.X_2'.X_3'$$

$$\text{(VIII)} \quad WA' = 2X_1' + 84X_2' + 13X_3' + 84.6X_1'.X_2' + 1.6X_1'.X_3' - 150X_2'.X_3' + 22.8X_1'.X_2'.X_3'$$

$$\text{(IX)} \quad WS' = 10X_1' + X_2' + 10X_3' - 18X_1'.X_2' - 16X_1'.X_3' - 2X_2'.X_3' + 135X_1'.X_2'.X_3'$$

wherein $T_g'$ has a value in the range from 0 to 50 °C, wherein WA′ has a value of at most 25%, and wherein WS′ has a value of at least 8, after 24 hours, as defined hereinafter, when applied in coating films, and wherein component d is 1% by weight of acrylic acid.

It will be appreciated that these preferred starting comonomer compositions, containing monomers (a), (b) and (c) in the suitable proportions meeting the beforementioned equations VII-IX, are represented by the shaded area in figure 2.

One of the most preferred embodiments of the interpolymers of the present invention is formed by those, characterized in that they are derivable from a starting comonomer mixture consisting of :

(a″) from 15 to 32% by weight of methyl methacrylate;
(b″) from 10 to 25% by weight of butyl acrylate;
(c″) from 50 to 65% by weight of VeoVa 9;
(d″) from 0.5 to 2% by weight of acrylic acid or acrylamide.

It has moreover been found, that by the use of only one copolymerizable stabilizing component (d), latices could be obtained showing an acceptable low free monomer content, i.e. ≤ 2% by weight, based on the solid content, and a good stability.

It will be appreciated that the present invention is also relating to latices, containing as polymeric constituent 30-60% by weight of an interpolymer as described hereinbefore and more preferably those wherein the polymeric constituent amounts from 40-50% by weight, to coating compositions comprising a latex and preferably at least one pigment, and to solid interpolymeric products formed by physical drying of such latices or coatings and to redispersible latex powders formed by physical drying of such latices and to coating compositions derived from such powders.

A further aspect of the present invention relates to a process for the preparation of latices containing the hereinbefore specified interpolymers.

It was found in addition that these attractive results could be reached by effecting thermal initiation as well as redox initiation of the starting reaction mixture, being rather independent on the actual relative proportions of the components (a)-(d) in the indicated ranges. More preferably thermal initiation of the reaction mixture is applied.

The interpolymers containing latices according to the present invention may be prepared under conditions which are known in the art and generally involve a temperature of 20-100 °C. More particularly the preparation process is carried out in a temperature range of from 60-100 °C, when thermal initiation is employed and preferably 75-85 °C.

In the reaction mixture additional stabilizers, optionally to be copolymerized, one or more polymerization initiators and optionally buffering agents are to be included, but more preferably not any buffering agent is used.

Stabilizers suitably constitute about 1-4% by weight of the latex in total. It is preferred that the stabilizers used in the latex comprise at least one anionic surface active agent, which is believed to have a beneficial effect on the stability of the latex and in particular on the reaction mixture during the polymerization process, facilitating the formation of micelles in which the interpolymer is formed, and optionally a non-ionic surface active agent, which is believed to contribute to latex stability; or at least one surface active agent of the mixed anionic/non-ionic type.

Suitable anionic surface active agents include alkylaryl sulphonates, for example alkylbenzene sulphonates; salts

of sulphosuccinic esters; alkyl sulphates, alkyl sulphonates, sulphates of hydroxyethyl esters of monocarboxylic acids, sulphates of alkylphenoxypolyethoxyethanols, sulphates and sulphonates of hydroxypropyl esters of monocarboxylic acids and sulphates of monoglycerides of monocarboxylic acids, such compounds having 12-24 carbon atoms; and salts of $C_{9-19}$ monocarboxylic acids. Suitably 0.05-1% by weight of the latex may be constituted by anionic surface active agents, preferably 0.1-0.5%.

Suitable non-ionic surface active agents include reaction products of hydroxy compounds with alkylene oxides, such as ethylene oxide or propylene oxide, for example a compound of the general formula $R-C_6H_4-O-(CH_2-CH_2-O)_n-H$ where R represents a $C_{6-16}$, especially $C_{8-9}$, alkyl group and n represents a number from 3 to 40; reaction products of ethylene oxide with propylene glycol ethers, or with monocarboxylic acids, suitably of 6-20 carbon atoms, for example lauric acid, palmitic acid or stearic acid, or with alcohols, suitably of 6-20 carbon atoms, for example octyl, lauryl or cetyl alcohol. Suitably 0.5-2% of the weight of the latex may be constituted by non-ionic surface active agents.

Suitable surface active agents of the mixed anionic/non-ionic type include sulphonates based on alkylaryl polyglycol ethers.

Preferably both an anionic and a non-ionic surface active agent are used. Especially preferred is the use of an alkylaryl sulphonate together with a compound $R-C_6H_4-O-(CH_2-CH_2-O)_n-H$, for example nonyl phenol ethoxylate.

Suitable initiators are compounds which form free radicals under the reaction conditions for the aqueous emulsion polymerization, whether by thermal breakdown, redox reaction or photo initiation. Initiators include organic water soluble peroxides, hydroperoxides and persulphates. Examples are hydrogen peroxide and sodium, ammonium or, especially, potassium persulphate. 0.1-1%, preferably 0.4-0.7% of initiator, based on weight of the reaction mixture, is suitably employed.

Buffering agents if any needed suitable for use in the polymerization process are water-soluble compounds which can prevent the pH of the mixture falling below about 4. Preferred buffering agents include borax and an organic acid, suitably acetic acid, or an alkali metal carbonate or bicarbonate.

According to a preferred embodiment of the process of the present invention, thermal initiation is applied and the reaction is carried out in an inert atmosphere, nitrogen suitably being used to flush out the reaction vessel prior to the start of the reaction.

According to a further preferred embodiment of the process of the present invention, an emulsion premix is prepared in demineralized water from a part of one or more surface active agents, and a part of one or more redox initiators and comonomers (a), (b), (c) and (d). The reactor is flushed with nitrogen and filled with about an equal amount of demineralized water, and the remaining amounts of the surface active agent(s) and initiator.

The reactor is heated to a temperature in the specified range, e.g. 80 °C and the nitrogen stream is stopped and the emulsion premix addition is started. The addition is normally extended over a period of from 2 to 5 hours during which the originally adjusted temperature is maintained. A post polymerization period after termination of the addition of premix of from 1 to 3 hours is normally used at a temperature of e.g. 80 °C.

After this post polymerization, the latex obtained is cooled and if necessary filtered.

The generally obtained latices have a total solids content in the range of from 30-60% by weight of the latex and preferably from 40-50% and a weight average particle diameter in the range of from 90-170 nm depending on the surfactant repartition between the emulsion premix and the initial reactor charge.

A further aspect of the present invention relates to a latex produced by the process described above, and the interpolymer which forms on physical drying of such a latex, for example to form a coating on a substrate or a powder intended for reconstitution as a latex or use in a concrete or other latex based end product.

Latices in accordance with the invention may find application in concretes, lacquers, paints, wood coatings, anti-corrosive paints and textured coatings. They are of particular interest for composing lacquers and paints due to their good film forming properties, their water resistance, their high pigment binding power, flexibility, the lack of tackiness of the films, their alkali resistance and resistance to ultra violet light. Paints containing the latices of the invention contain pigments, and will commonly contain further constituents, examples being fillers, co-solvents, thickeners, dispersants, preservatives, corrosion inhibitors, and anti foaming agents.

It will be appreciated therefore that coating compositions, comprising the latices according to the present invention and solid interpolymer product formed thereof, also form an aspect of the present invention.

The invention will now be further described with reference to the following examples, however without restricting its scope to these specific embodiments.

EXAMPLE I

In a three litre reaction flask, provided with a central and four peripheral glass openings fitted with a reflux condenser, stirrer, thermometer, nitrogen inlet tube and emulsion premix inlet tube.

An emulsion premix is prepared by mixing the following ingredients in the given amounts.

| | |
|---|---|
| Demineralized water | 575.0 g |
| Humifen SF 90 (10% in water)[+] | 95.0 |
| Arkopal N230 (25% in water)[++] | 120.0 |
| Potassium persulphate | 4.0 |
| Potassium carbonate | 3.4 |
| Methyl methacrylate | 330.0 |
| butyl acrylate | 330.0 |
| VeoVa 9[+++] | 330.0 |
| Acrylic acid | 10.0 |

\+ "Humifen SF 90" is a registered trade mark for an alkaryl sulphonate anionic surfactant

++ "Arkopal N230" is a registered trade mark for a non-ionic surfactant

+++ "VeoVa 9" is a registered trade mark for vinyl esters of tertiary carboxylic acid containing 9 carbon atoms

The reaction flask is swept with nitrogen and the following ingredients are added:

| | |
|---|---|
| Demineralized water | 480.2 g |
| Humifen SF 90 (10% in water) | 5.0 |
| Potassium persulphate | 1.0 |

The ingredients in the reaction flask are heated to 80 °C. When the temperature reaches 80 °C, the nitrogen stream is stopped and the emulsion premix addition is started. The monomer pre-emulsion is added regularly over a period of 3 hours and a temperature of 80 °C is maintained. A 2-hour digestion period (at the same temperature) is applied. After the postcooking, the latex is cooled and if necessary filtered. In general, these latices have a total solids content of 45% and the weight average particle diameter is about 150 nm.

The obtained latices were tested as to water absorption, waterspot resistance of latex polymer film, whereas also monomer conversion, viscosity, minimum film formation, temperature, glass transition temperature, tensile strength and yield value, surface hardness, were measured.

EXAMPLES II-VI

In the same way as described in Example I, interpolymer latices were prepared from different sets of comonomers.

The respective amounts of the applied constituting monomers in per cent by weight as to total starting composition and the relevant properties of the latices obtained are listed in the following table.

TABLE

| Experiment/ Latex No. | I | II | III | IV | Comparative COMP A* | Comparative COMP B** |
|---|---|---|---|---|---|---|
| monomer composition in weight %: | | | | | | |
| methyl methacrylate | 33.0 | 16.5 | 33.0 | 33.0 | | |
| butyl acrylate | 33.0 | 16.5 | 33.0 | 33.0 | | |
| VeoVa 9 | 33.0 | 66.0 | 33.0 | 33.0 | 37.5 | |
| ethyl acrylate | | | | | 61.2 | |
| acrylic acid | 1.0 | 1.0 | | | 1.3 | |
| acryl amide | | | 1.0 | | | |
| diacetone acrylamide | | | | 1.0 | | |
| latex properties: | | | | | | |
| conv. in % on monomer intake | 99.4 | 99.0 | 98.2 | 99.5 | 93.4 | |
| solid content in % | 47.2 | 45.3 | 45.5 | 47.0 | 46.0 | 49.1 |
| minimum film forming temperature in °C | 16.0 | 25.0 | 12.0 | 11.0 | < 0 | 17.0 |
| particle size in nm | 153.9 | 138.4 | 140.4 | 139.4 | 127.4 | 167.0 |
| viscosity in mPa's | 40.0 | 40.0 | 50.0 | 40.0 | 50.0 | 4500.0 |
| Polymer properties: | | | | | | |
| water spot resistance | | | | | | |
| after 1h | 10 | 10 | 10 | 10 | 8 | 9 |
| after 24 h | 8 | 8 | 7 | 8 | 2 | 6 |
| $T_g$ | 13.0 | 21.0 | 13.0 | 12.5 | 2.0 | 21.0 |
| water absorption in % (thick film) - (after 14 days) | 25.0 | 15.0 | 21.3 | 20.5 | 35.0 | 24.0 |

* Comparative test sample A was taken from a composition prepared according to British patent No. 967,479

** Comparative test sample B was Acronal 290 D (trade mark) a commercially available, generally used coating composition

The water absorption of latex polymer films (Thick film test method) was measured as described hereinafter.

A wet film of 2 mm thickness is applied on a polyethylene foil (the latex is kept on the foil by applying an automotive sealer on the edges of the foil). To avoid a too fast evaporation of water and as a result severe mud-cracking the panels are covered with some water vapour transmitting material and then stored at 20 °C above the $T_g$ for a week. The cover is removed after clear films are formed. Three pieces of 2 x 2 cm are cut from the film after removal from the glass panel and weighed to the nearest 0.1 mg. These are stored in demineralized water at 23 °C and reweighed after 1, 2, 4, 7 and eventually 14 days (after removal of the excess of water by filter paper). The water absorption is calculated from the observed weight increase. The result of the triplicate measurements are averaged and usually the relation between immersion time and water absorption is graphically plotted. In case the water absorption of emulsion paints is of interest, it is suggested to prepare a paint film with 40% PVC pigmentation.

The water spot resistance of latex polymer films was measured as described hereinafter.

A wet latex film of 200 µm is applied on a glass panel and allowed to dry for a week at 20 °C above the $T_g$. When cooled to 23 °C a drop of water is brought on the film and the panel is placed on a dark underground. After 5, 10, 15 and 60 minutes and 24 hours the whitening effect is visually judged. A rating between 10 (film is unaffected) and 0 (film is completely white) is given every time. After one hour the four scores are added and divided by four (max. score 40). If the film scores very high it is worthwhile to continue the test for another 23 hours and to give a 24 hours rating between 0 and 10. In order to avoid evaporation of the water droplet, it can be covered overnight by a watch glass.

Tensile strength measurement.

A wet film of 2 mm thickness is applied on polyethylene foil. To avoid a too fast evaporation of water the film is covered with some water vapour transmitting material and then stored for drying at 40 °C temperature for a week. After clear films have been formed test samples are made with the aid of a mould. The test samples have a length of 25,0 mm and a thickness of ± 1 mm.

The samples are then drawn out to break in a tensile strength tester with a preforce of 0,5 N and a drawing speed of 500 mm/mm. The relationship between the applied force and the elongation is plotted in figure 3.

Points to be considered are the yield value and its corresponding elongation and the failure at break and its corresponding elongation. The first point says something of the flexibility and the second point says something of the strenght of the film.

Stress-strain diagram

| | I 0.32 | $C_1$* | $C_2$** | $C_3$*** | $C_4$**** |
|---|---|---|---|---|---|
| Yield (MPa) | 6.5 | 8.7 | 6.7 | 3.4 | 2.7 |
| Yield elongation (%) | 9.9 | 9.1 | 17.4 | 49.4 | 35.7 |
| Failure (MPa) | 9.0 | 5.6 | 10.6 | 11.3 | 10.8 |
| Max. elongation (%) | 308 | 286 | 406 | 349 | 359 |

* Comparative test sample $C_1$ was a composition prepared from vinyl acetate (49%) VeoVa 10 (registered trade mark) (32.5%), VeoVa 9 (registered trade mark) (17.5%) and acrylic acid (1%);

** Comparative test sample $C_2$ was Acronal®290 D (trade mark) a commercially available coating composition derived from styrene and acrylate;

*** Comparative test sample $C_3$ was Primal®388 (trade mark) a commercially available coating composition derived from acrylates only;

**** Comparative test sample $C_4$ was a composition, prepared from methyl methacrylate (49.5%), butyl acrylate (49.5%) and acrylic acid (1%).

Freeze thaw stability test.

The latex is introduced in a 100 ml polyethylene bottle. The bottle is stored at a temperature of -18 °C for for 24 hours and then screened for stability failure.

Above is repeated 5 times except with premature failure.

**Claims**

**Claims for the following Contracting States : BE, CH, LI, DE, FR, GB, IT, NL, SE**

1. Interpolymers obtainable by polymerization of a comonomer mixture consisting of

(a) methyl methacrylate;
(b) butyl acrylate;
(c) the vinyl ester of Versatic 9 acid (registered trade mark), representing a tertiary aliphatic carboxyl acid in which the acid moiety contains 9 carbon atoms, optionally mixed with at most 30% by weight (of any mixture of Versatic acid vinyl esters) of the vinylester of Versatic 10 acid (registered trade mark), representing a tertiary aliphatic carboxylic acid, in which the acid moiety contains 10 carbon atoms;
(d) a stabilizing monomer, selected from the group comprising acrylic acid, methacrylic acid, acrylamide, methacrylamide, diacetone acrylamide and sodium, vinyl sulphonate and mixtures thereof, in an amount of from 0.5 to 5% by weight relative to the total weight of monomers,

wherein the respective weight percentages in the components (a), (b) and (c) being calculated relative to the total weight of the sum of the amounts of these components, are simultaneously fulfilling the following equations, each describing compositions having equal performance contour lines in a triangle diagram (Fig. 1) :

$$(I) \quad T_g = 112X_1 - 44X_2 + 50X_3 - 76X_1.X_2 - 108X_1.X_3 - 52X_2.X_3 - 3X_1.X_2.X_3$$

$$(II) \quad WA = 2X_1 + 84X_2 + 13X_3 + 84.6X_1.X_2 + 1.6X_1.X_3 - 150X_2.X_3 - 22.8X_1.X_2.X_3$$

$$(III) \quad WS = 10X_1 + X_2 + 10X_3 - 18X_1.X_2 - 16X_1.X_3 - 2X_2.X_3 + 135X_1.X_2.X_3$$

wherein $T_g$ represents the glass transition temperature having a value in the range of from -10 °C to 50 °C, wherein WA represents the water absorption value being at most 30% m/m, wherein WS represents the water spot value being at least 7, after 24 hours, wherein $X_1$ represents the weight percentage of component (a), $X_2$ represents the weight percentage of component (b) and wherein $X_3$ represents the weight percentage of component (c), the values of each of $X_1$, $X_2$ and $X_3$ being in the range of from 5% to 90%, calculated on the total weight of components (a), (b) and (c).

**2.** Interpolymers according to claim 1, characterized in that as component (c) the vinyl ester of Versatic 9 acid, which is optionally mixed with less than 5% by weight, calculated on the total weight of such vinyl ester mixture, of the vinyl ester of Versatic 10 acid.

**3.** Interpolymers according to claims 1 and 2, characterized in that as component (d) acrylic acid or acrylamide is used.

**4.** Interpolymers according to claims 1-3, characterized in that they are derivable from the components (a)-(d), wherein the component (d) is consisting of acrylic acid in an amount of 0.5-2% by weight.

**5.** Interpolymers according to claim 1, characterized in that the weight fractions of the components (a'), (b') and (c') simultaneously fulfil the equations IV-VI, each describing compositions having equal performance contour lines in a triangle diagram:

$$(IV) \quad T_g' = 112X_1' - 44X_2' + 50X_3' - 76X_1'.X_2' - 108X_1'.X_3' - 52X_2'.X_3' - 3X_1'.X_2'.X_3'$$

$$(V) \quad WA' = 2X_1' + 84X_2' + 13X_3' + 84.6X_1'.X_2' + 1.6X_1'.X_3' - 150X_2'.X_3' - 22.8X_1'.X_2'.X_3'$$

$$(VI) \quad WS' = 10X_1' + X_2' + 10X_3' - 18X_1'.X_2' - 16X_1'.X_3' - 2X_2'.X_3' + 135X_1'.X_2'.X_3'$$

wherein $T_g'$ has a value in the range from 0 to 50 °C, wherein WA' has a value of at most 25%, and wherein WS' has a value of at least 8, after 24 hours, when applied in coating films, and wherein component d is 1% by weight of acrylic acid.

**6.** Interpolymers according to claims 1 and 2, characterized in that they are derivable from a starting mixture consisting of :

(a'') from 15 to 32% by weight of methyl methacrylate;
(b'') from 10 to 25% by weight of butyl acrylate;
(c'') from 50 to 65% by weight of VeoVa 9;
(d'') from 0.5 to 2% by weight of acrylic acid or acrylamide.

**7.** A latex containing as polymeric constituent 30-60% by weight of an interpolymer according to claims 1-6.

**8.** A latex according to claim 7, characterized in that the polymeric constituent amounts from 40-50% by weight.

**9.** Coating compositions comprising a latex according to any one of the claims 7 and 8 and at least one pigment.

**10.** A solid interpolymeric product formed by physical drying of a latex according to claims 7 and 8.

**11.** A solid interpolymeric product formed by the physical drying of a coating according to claim 9.

**12.** Redispersible latex powders, formed by physical drying of the latices according to claims 7 and 8.

**13.** Coating composition based on powders according to claim 12.

**14.** A process for the preparation of latices, containing the interpolymers according to claims 1-6, by polymerization of the comonomer mixtures at a temperature in the range of from 20 to 100 °C in the presence of additional stabilizers, one or more polymerization initiators and optionally buffering agents.

**15.** A process according to claim 14, characterized in that as stabilizer an anionic surface active agent and at least one non-ionic surface active agent is used in an amount of from 1 to 4% by weight.

**16.** A process according to claims 14 and 15, characterized in that an alkylaryl sulphonate is used together with a compound

$$R-C_6H_4-O-(-CH_2-CH_2-O)_n-H$$

where R represents a $C_{6-16}$ alkyl group and n represents a number from 3 to 40.

**17.** A process according to any one of the claims 14-16, characterized in that as initiators are used organic water soluble peroxides, hydroperoxides and/or persulphates.

**18.** A process according to claim 17, characterized in that hydrogen peroxide and sodium, ammonium or potassium persulphate is used in an amount of from 0.4 to 0.7% by weight, based on the weight of the reaction mixture.

**19.** A process according to claim 14, characterized in that as buffering agent is used borax and an organic acid and preferably acetic acid, or an alkali metal carbonate or bicarbonate.

**Claims for the following Contracting State : ES**

**1.** Process for the preparation of interpolymers by polymerization of a comonomer mixture consisting of

(a) methyl methacrylate;
(b) butyl acrylate;
(c) the vinyl ester of Versatic 9 acid (registered trade mark), representing a tertiary aliphatic carboxyl acid in which the acid moiety contains 9 carbon atoms, optionally mixed with at most 30% by weight (of any mixture of Versatic acid vinyl esters) of the vinyl ester of Versatic 10 acid (registered trade mark), representing a tertiary aliphatic carboxylic acid, in which the acid moiety contains 10 carbon atoms;
(d) a stabilizing monomer, selected from the group comprising acrylic acid, methacrylic acid, acrylamide, methacrylamide, diacetone acrylamide and sodium, vinyl sulphonate and mixtures thereof, in an amount of from 0.5 to 5% by weight relative to the total weight of monomers,
wherein the respective weight percentages in the components (a), (b) and (c) being calculated relative to the total weight of the sum of the amounts of these components, are simultaneously fulfilling the following equations, each describing compositions having equal performance contour lines in a triangle diagram (Fig. 1):

$$(I) \quad T_g = 112X_1 - 44X_2 + 50X_3 - 76X_1.X_2 - 108X_1.X_3 - 52X_2.X_3 - 3X_1.X_2.X_3$$

$$(II) \quad WA = 2X_1 + 84X_2 + 13X_3 + 84.6X_1.X_2 + 1.6X_1.X_3 - 150X_2.X_3 - 22.8X_1.X_2.X_3$$

$$(III) \quad WS = 10X_1 + X_2 + 10X_3 - 18X_1.X_2 - 16X_1.X_3 - 2X_2.X_3 + 135X_1.X_2.X_3$$

wherein $T_g$ represents the glass transition temperature having a value in the range of from -10 °C to 50 °C, wherein WA represents the water absorption value being at most 30% m/m, wherein WS represents the water spot value being at least 7, after 24 hours wherein $X_1$ represents the weight percentage of component (a), $X_2$ represents the weight percentage of component (b) and wherein $X_3$ represents the weight percentage of component (c), the values of each of $X_1$, $X_2$ and $X_3$ being in the range of from 5% to 90%, calculated on the total weight of components (a), (b) and (c).

**2.** Process according to claim 1, characterized in that as component (c) the vinyl ester of Versatic 9 acid, which is optionally mixed with less than 5% by weight, calculated on the total weight of such vinyl ester mixture, of the vinyl ester of Versatic 10 acid.

3. Process according to claims 1 and 2, characterized in that as component (d) acrylic acid or acrylamide is used.

4. Process according to claims 1-3, characterized in that they are derivable from the components (a)-(d), wherein the component (d) is consisting of acrylic acid in an amount of 0.5-2% by weight

5. Process according to claim 1, characterized in that the weight fractions of the components (a'), (b') and (c') simultaneously fulfil the equations IV-VI, each describing compositions having equal performance contour lines in a triangle diagram:

$$(IV)\qquad T_g' = 112X_1' - 44X_2' + 50X_3' - 76X_1'.X_2' - 108X_1'.X_3' - 52X_2'.X_3' - 3X_1'.X_2'.X_3'$$

$$(V)\qquad WA' = 2X_1' + 84X_2' +13X_3' + 84.6X_1'.X_2' + 1.6X_1'.X_3' - 150X_2'.X_3' - 22.8X_1'.X_2'.X_3'$$

$$(VI)\qquad WS' = 10X_1' + X_2' +10X_3' - 18X_1'.X_2' -16X_1'.X_3' - 2X_2'.X_3' + 135X_1'.X_2'.X_3'$$

wherein $T_g'$ has a value in the range from 0 to 50 °C, wherein WA' has a value of at most 25%, and wherein WS' has a value of at least 8, after 24 hours, when applied in coating films, and wherein component d is 1% by weight of acrylic acid.

6. Process according to claims 1 and 2, characterized in that they are derivable from a starting mixture consisting of:

(a'') from 15 to 32% by weight of methyl methacrylate;
(b'') from 10 to 25% by weight of butyl acrylate;
(c'') from 50 to 65% by weight of VeoVa 9;
(d'') from 0.5 to 2% by weight of acrylic acid or acrylamide.

7. A process for the preparation of latices, containing the interpolymers according to claims 1-6, by polymerization of the comonomer mixtures at a temperature in the range of from 20 to 100 °C in the presence of additional stabilizers, one or more polymerization initiators and optionally buffering agents.

8. A process according to claim 7, characterized in that as stabilizer an anionic surface active agent and at least one non-ionic surface active agent is used in an amount of from 1 to 4% by weight.

9. A process according to claims 7 and 8, characterized in that an alkylaryl sulphonate is used together with a compound

$$R-C_6H_4-O-(-CH_2-CH_2-O)_nH$$

where R represents a $C_{6-16}$ alkyl group and n represents a number from 3 to 40.

10. A process according to any one of the claims 7-8, characterized in that as initiators are used organic water soluble peroxides, hydroperoxides and/or persulphates.

11. A process according to claim 10, characterized in that hydrogen peroxide and sodium, ammonium or potassium persulphate is used in an amount of from 0.4 to 0.7% by weight, based on the weight of the reaction mixture.

12. A process according to claim 7, characterized in that as buffering agent is used borax and an organic acid and preferably acetic acid, or an alkali metal carbonate or bicarbonate.

13. Process for preparing a solid interpolymeric product by physical drying of a latex prepared according to claim 7.

**Patentansprüche**

**Patentansprüche für folgende Vertragsstaaten : BE, CH, LI, DE, FR, GB, IT, NL, SE**

1. Mischpolymerisate, erhältlich durch Polymerisation einer Comonomermischung, bestehend aus

(a) Methacrylsäuremethylester;
(b) Acrylsäurebutylester;

(c) dem Vinylester der Versatic-9-Säure (eingetragenes Warenzeichen), einer tertiären aliphatischen Carbonsäure, in der der Säurerest 9 Kohlenstoffatome enthält, gegebenenfalls mit höchstens 30 Gew.-% (jeder beliebigen Versaticsäurevinylester-Mischung) des Vinylesters der Versatic-10-säure (eingetragenes Warenzeichen), einer tertiären aliphatischen Carbonsäure, in der der Säurerest 10 Kohlenstoffatome enthält, gemischt;
(d) einem stabilisierend wirkenden Monomer, ausgewählt aus der Gruppe Acrylsäure, Methacrylsäure, Acrylamid, Methacrylamid, Diacetonacrylamid und Natrium, Vinylsulfonat sowie deren Mischungen in einer Menge von 0,5 bis 5 Gew.-%, bezogen auf das Gesamtgewicht der Monomere,
wobei die jeweiligen Gewichtsprozentsätze in den Komponenten (a), (b) und (c) bezogen auf das Gesamtgewicht der Summe der Mengen dieser Komponenten berechnet, gleichzeitig die folgenden, Zusammensetzungen gleicher Leistungskonturlinien in einem Dreiecksdiagramm beschreibenden Gleichungen erfüllen (Fig. 1):

(I) $$T_g = 112X_1 - 44X_2 + 50X_3 - 76X_1.X_2 - 108X_1.X_3 - 52X_2.X_3 - 3X_1.X_2.X_3$$

(II) $$WA = 2X_1 + 84X_2 + 13X_3 + 84{,}6X_1.X_2 + 1{,}6X_1.X_3 - 150X_2.X_3 - 22{,}8X_1.X_2.X_3$$

(III) $$WS = 10X_1 + X_2 + 10X_3 - 18X_1.X_2 - 16X_1.X_3 - 2X_2.X_3 + 135X_1.X_2.X_3$$

wobei $T_g$ die Glasübergangstemperatur mit einem Wert im Bereich von -10°C bis 50°C, WA der Wasseraufnahmewert von höchstens 30% m/m, WS der Wasserfleckwert von mindestens 7 nach 24 Stunden, $X_1$ der Gewichtsanteil der Komponente (a), $X_2$ der Gewichtsanteil der Komponente (b) und $X_3$ der Gewichtsanteil der Komponente (c) ist, wobei die jeweiligen Werte von $X_1$, $X_2$ und $X_3$ im Bereich von 5% bis 90% liegen, bezogen auf das Gesamtgewicht der Komponenten (a), (b) und (c).

**2.** Mischpolymerisate nach Anspruch 1, dadurch gekennzeichnet, daß man als Komponente (c) den Vinylester der Versatic-9-säure, gegebenenfalls mit weniger als 5 Gew.-%, bezogen auf das Gesamtgewicht einer solchen Vinylestermischung, des Vinylesters der Versatic-10-säure gemischt.

**3.** Mischpolymerisate nach den Ansprüchen 1 und 2, dadurch gekennzeichnet, daß man als Komponente (d) Acrylsäure oder Acrylamid verwendet.

**4.** Mischpolymerisate nach den Ansprüchen 1 bis 3, dadurch gekennzeichnet, daß sie aus den Komponenten (a)-(d) ableitbar sind, wobei Komponente (d) aus Acrylsäure in einer Menge von 0,5 bis 2 Gew.-% besteht.

**5.** Mischpolymerisate nach Anspruch 1, dadurch gekennzeichnet, daß die Gewichtsanteile der Komponenten (a'), (b') und (c') gleichzeitig die Zusammensetzungen gleicher Leistungskonturlinien in einem Dreiecksdiagramm beschreibenden Gleichungen IV bis VI erfüllen:

(IV) $$T_g' = 112X_1' - 44X_2' + 50X_3' - 76X_1'.X_2' - 108X_1'.X_3' - 52X_2'.X_3' - 3X_1'.X_2'.X_3'$$

(V) $$WA' = 2X_1' + 84X_2' + 13X_3' + 84{,}6X_1'.X_2' + 1{,}6X_1'.X_3' - 150X_2'.X_3' - 22{,}8X_1'.X_2'.X_3'$$

(VI) $$WS' = 10X_1' + X_2' + 10X_3' - 18X_1'.X_2' - 16X_1'.X_3' - 2X_2'.X_3' + 135X_1'.X_2'.X_3'$$

wobei $T_g'$ einen Wert im Bereich von 0 bis 50°C, WA' einen Wert von höchstens 25% und WS', im Fall der Anwendung in Beschichtungsfilmen nach 24 Stunden einen Wert von mindestens 8 hat und wobei Komponente d 1 Gew.-% Acrylsäure ist.

**6.** Mischpolymerisate nach den Ansprüchen 1 und 2, dadurch gekennzeichnet, daß sie sich aus einer Anfangsmischung, bestehend aus:

(a") 15 bis 32 Gew.-% Methacrylsäuremethylester;
(b") 10 bis 25 Gew.-% Acrylsäurebutylester;
(c") 50 bis 65% Gew.-% VeoVa 9;
(d") 0,5 bis 2 Gew.-% Acrylsäure oder Acrylamid ableiten lassen.

**7.** Latex, das als polymeren Bestandteil 30 bis 60 Gew.-% eines Mischpolymerisats nach den Ansprüchen 1 bis 6 enthält.

**8.** Latex nach Anspruch 7, dadurch gekennzeichnet, daß der polymere Bestandteil 40 bis 50 Gew.-% ausmacht.

**9.** Beschichtungszusammensetzungen aus einem Latex nach einem der Ansprüche 7 oder 8 und mindestens einem Pigment.

**10.** Festes, mischpolymerisiertes Produkt, das durch physikalisches Trocknen eines Latex nach den Ansprüchen 7 und 8 gebildet wird.

**11.** Festes, mischpolymerisiertes Produkt, das durch physikalisches Trocknen einer Beschichtung nach Anspruch 9 gebildet wird.

**12.** Redispergierbare Latexpulver, die durch physikalisches Trocknen der Latices nach den Ansprüchen 7 und 8 gebildet werden.

**13.** Beschichtungszusammensetzung, die auf Pulvern nach Anspruch 12 beruht.

**14.** Verfahren zur Herstellung von Latices, die die Mischpolymerisate nach den Ansprüchen 1 bis 6 enthalten, durch Polymerisation der Comonomermischungen bei einer Temperatur im Bereich von 20 bis 100°C in Gegenwart zusätzlicher Stabilisiermittel, eines oder mehrerer Polymerisationsinitiatoren und gegebenenfalls von Puffersubstanzen.

**15.** Verfahren nach Anspruch 14, dadurch gekennzeichnet, daß man als Stabilisiermittel eine anionische, oberflächenaktive Substanz und mindestens eine nichtionische oberflächenaktive Substanz in einer Menge von 1 bis 4 Gew.-% verwendet.

**16.** Verfahren nach den Ansprüchen 14 und 15, dadurch gekennzeichnet, daß man ein Alkylarylsulfonat zusammen mit einer Verbindung $R\text{-}C_6H_4\text{-}O\text{-}(\text{-}CH_2\text{-}CH_2\text{-}O)_n\text{-}H$, wobei R eine $C_{6-16}$-Alkylgruppe und n eine Zahl zwischen 3 und 40 darstellt, verwendet.

**17.** Verfahren nach einem der Ansprüche 14 bis 16, dadurch gekennzeichnet, daß man als Initiatoren organische wasserlösliche Peroxide, Hydroperoxide und/oder Persulfate verwendet.

**18.** Verfahren nach Anspruch 17, dadurch gekennzeichnet, daß man Wasserstoffperoxid und Natrium-, Ammonium- oder Kaliumpersulfat in einer Menge von 0,4 bis 0,7 Gew.-%, bezogen auf das Gewicht der Reaktionsmischung, verwendet.

**19.** Verfahren nach Anspruch 14, dadurch gekennzeichnet, daß man als Puffersubstanz Borax und eine organische Säure und vorzugsweise Essigsäure oder ein Alkalimetallcarbonat oder -bicarbonat verwendet.

**Patentansprüche für folgenden Vertragsstaat : ES**

**1.** Verfahren zur Herstellung von Mischpolymerisaten, erhältlich durch Polymerisation einer Comonomermischung, bestehend aus

(a) Methacrylsäuremethylester;
(b) Acrylsäurebutylester;
(c) dem Vinylester der Versatic-9-Säure (eingetragenes Warenzeichen), einer tertiären aliphatischen Carbonsäure, in der der Säurerest 9 Kohlenstoffatome enthält, gegebenenfalls mit höchstens 30 Gew.-% (jeder beliebigen Versaticsäurevinylester-Mischung) des Vinylesters der Versatic-10-säure (eingetragenes Warenzeichen), einer tertiären aliphatischen Carbonsäure, in der der Säurerest 10 Kohlenstoffatome enthält, gemischt;
(d) einem stabilisierend wirkenden Monomer, ausgewählt aus der Gruppe Acrylsäure, Methacrylsäure, Acrylamid, Methacrylamid, Diacetonacrylamid und Natrium, Vinylsulfonat sowie deren Mischungen in einer Menge von 0,5 bis 5 Gew.-%, bezogen auf das Gesamtgewicht der Monomere,
wobei die jeweiligen Gewichtsprozentsätze in den Komponenten (a), (b) und (c) bezogen auf das Gesamtgewicht der Summe der Mengen dieser Komponenten berechnet, gleichzeitig die folgenden, Zusammensetzungen gleicher Leistungskonturlinien in einem Dreiecksdiagramm beschreibenden Gleichungen erfüllen (Fig. 1):

$$\text{(I)} \qquad T_g = 112X_1 - 44X_2 + 50X_3 - 76X_1.X_2 - 108X_1.X_3 - 52X_2.X_3 - 3X_1.X_2.X_3$$

$$\text{(II)} \qquad WA = 2X_1 + 84X_2 + 13X_3 + 84{,}6X_1.X_2 + 1{,}6X_1.X_3 - 150X_2.X_3 - 22{,}8X_1.X_2.X_3$$

(III) $WS = 10X_1 + X_2 + 10X_3 - 18X_1.X_2 - 16X_1.X_3 - 2X_2.X_3 + 135X_1.X_2.X_3$

wobei $T_g$ die Glasübergangstemperatur mit einem Wert im Bereich von -10°C bis 50°C, WA der Wasseraufnahmewert von höchstens 30% m/m, WS der Wasserfleckwert von mindestens 7 nach 24 Stunden, $X_1$ der Gewichtsanteil der Komponente (a), $X_2$ der Gewichtsanteil der Komponente (b) und $X_3$ der Gewichtsanteil der Komponente (c) ist, wobei die jeweiligen Werte von $X_1$, $X_2$ und $X_3$ im Bereich von 5% bis 90% liegen, bezogen auf das Gesamtgewicht der Komponenten (a), (b) und (c).

**2.** Verfahren nach Anspruch 1, dadurch gekennzeichnet, daß man als Komponente (c) den Vinylester der Versatic-9-säure, gegebenenfalls mit weniger als 5 Gew.-%, bezogen auf das Gesamtgewicht einer solchen Vinylestermischung, des Vinylesters der Versatic-10-säure gemischt.

**3.** Verfahren nach den Ansprüchen 1 und 2, dadurch gekennzeichnet, daß man als Komponente (d) Acrylsäure oder Acrylamid verwendet.

**4.** Verfahren nach den Ansprüchen 1 bis 3, dadurch gekennzeichnet, daß sie aus den Komponenten (a)-(d) ableitbar sind, wobei Komponente (d) aus Acrylsäure in einer Menge von 0,5 bis 2 Gew.-% besteht.

**5.** Verfahren nach Anspruch 1, dadurch gekennzeichnet, daß die Gewichtsanteile der Komponenten (a'), (b') und (c') gleichzeitig die Zusammensetzungen gleicher Leistungskonturlinien in einem Dreiecksdiagramm beschreibenden Gleichungen IV bis VI erfüllen:

(IV) $T_g' = 112X_1' - 44X_2' + 50X_3' - 76X_1'.X_2' - 108X_1'.X_3' - 52X_2'.X_3' - 3X_1'.X_2'.X_3'$

(V) $WA' = 2X_1' + 84X_2' + 13X_3' + 84{,}6X_1'.X_2' + 1{,}6X_1'.X_3' - 150X_2'.X_3' - 22{,}8X_1'.X_2'.X_3'$

(VI) $WS' = 10X_1' + X_2' + 10X_3' - 18X_1'.X_2' - 16X_1'.X_3' - 2X_2'.X_3' + 135X_1'.X_2'.X_3'$

wobei $T_g'$ einen Wert im Bereich von 0 bis 50°C, WA' einen Wert von höchstens 25% und WS' im Fall der Anwendung in Beschichtungsfilmen nach 24 Stunden einen Wert von mindestens 8 hat und wobei Komponente d 1 Gew.-% Acrylsäure ist.

**6.** Verfahren nach den Ansprüchen 1 und 2, dadurch gekennzeichnet, daß sie sich aus einer Anfangsmischung, bestehend aus:

(a") 15 bis 32 Gew.-% Methacrylsäuremethylester;
(b") 10 bis 25 Gew.-% Acrylsäurebutylester;
(c") 50 bis 65% Gew.-% VeoVa 9;
(d") 0,5 bis 2 Gew.-% Acrylsäure oder Acrylamid ableiten lassen.

**7.** Verfahren zur Herstellung von Latices, die die Mischpolymerisate nach den Ansprüchen 1 bis 6 enthalten, durch Polymerisation der Comonomermischungen bei einer Temperatur im Bereich von 20 bis 100°C in Gegenwart zusätzlicher Stabilisiermittel, eines oder mehrerer Polymerisationsinitiatoren und gegebenenfalls von Puffersubstanzen.

**8.** Verfahren nach Anspruch 7, dadurch gekennzeichnet, daß man als Stabilisiermittel eine anionische, oberflächenaktive Substanz und mindestens eine nichtionische oberflächenaktive Substanz in einer Menge von 1 bis 4 Gew.-% verwendet.

**9.** Verfahren nach den Ansprüchen 7 und 8, dadurch gekennzeichnet, daß man ein Alkylarylsulfonat einer zusammen mit einer Verbindung $R-C_6H_4-O-(-CH_2-CH_2-O)_n-H$, wobei R eine $C_{6-16}$-Alkylgruppe und n eine Zahl zwischen 3 und 40 darstellt, verwendet.

**10.** Verfahren nacheinem der Ansprüche 7 bis 9, dadurch gekennzeichnet, daß man als Initiatoren organische wasserlösliche Peroxide, Hydroperoxide und/oder Persulfate verwendet.

**11.** Verfahren nachAnspruch 10, dadurch gekennzeichnet, daß man Wasserstoffperoxid und Natrium-, Ammonium oder Kaliumpersulfat in einer Menge von 0,4 bis 0,7 Gew.-%, bezogen auf das Gewicht der Reaktionsmischung, verwendet.

**12.** Verfahren nach Anspruch 7, dadurch gekennzeichnet, daß man als Puffersubstanz Borax und eine organische Säure und vorzugsweise Essigsäure oder ein Alkalimetallcarbonat oder -bicarbonat verwendet.

**13.** Verfahren zur Herstellung eines festen, mischpolymerisierten Produkts durch physikalisches Trocknen eines nach Anspruch 7 hergestellten Latex.

**Revendications**

**Revendications pour les Etats contractants suivants : BE, CH, LI, DE, FR, GB, IT, NL, SE**

**1.** Interpolymères que l'on peut obtenir par la polymérisation d'un mélange de comonomères constitué

(a) de méthacrylate de méthyle,
(b) d'acrylate de butyle,
(c) l'ester vinylique de l'acide Versatic-9 (marque de fabrique déposée), représentant un acide carboxylique aliphatique tertiaire, dans lequel le groupement acide contient 9 atomes de carbone, éventuellement en mélange à au plus 30% en poids (de n'importe quel mélange d'esters vinyliques de l'acide versatique) de l'ester vinylique de l'acide Versatic-10 (marque de fabrique déposée), représentant un acide carboxylique aliphatique tertiaire dans lequel le groupement acide contient 10 atomes de carbone,
(d) un monomère stabilisant, choisi dans le groupe formé par l'acide acrylique, l'acide méthacrylique, l'acrylamide, le méthacrylamide, le diacétoneacrylamide et le vinylsulfonate de sodium et leurs mélanges, en une proportion de 0,5 à 5% en poids par rapport au poids total des monomères,

où les pourcentages pondéraux respectifs des composants (a), (b) et (c), calculés par rapport au poids total de la somme des quantités de ces composants, satisfont simultanément aux équations suivantes, chacune décrivant des compositions possédant des courbes de niveau de performances égales dans un diagramme triangulaire (Fig. 1) :

$$(I)\qquad T_g = 112X_1 - 44X_2 + 50X_3 - 76X_1.X_2 - 108X_1.X_3 - 52X_2.X_3 - 3X_1.X_2.X_3$$

$$(II)\qquad WA = 2X_1 + 84X_2 + 13X_3 + 84.6X_1.X_2 + 1.6X_1.X_3 - 150X_2.X_3 - 22.8X_1.X_2.X_3$$

$$(III)\qquad WS = 10X_1 + X_2 + 10X_3 - 18X_1.X_2 - 16X_1.X_3 - 2X_2.X_3 + 135X_1.X_2.X_3$$

où $T_g$ représente la température de transition vitreuse possédant une valeur qui varie de -10°C à 50°C, où WA représente la valeur d'absorption d'eau qui est d'au plus 30% m/m, où WS représente la valeur de la tache d'eau, qui est d'au moins 7, après 24 heures, où $X_1$ représente le pourcentage pondéral du composant (a), $X_2$ représente le pourcentage pondéral du composant (b) et où $X_3$ représente le pourcentage pondéral du composant (c), les valeurs de $X_1$, $X_2$ et $X_3$ se situant dans la plage de 5% à 90%, comme calculé sur le poids total des composants (a), (b) et (c).

**2.** Interpolymères suivant la revendication 1, caractérisés en ce que l'on utilise, à titre de composant (c), l'ester vinylique de l'acide Versatic-9, qui est éventuellement mélangé à moins de 5% en poids, calculés sur le poids total de ce mélange d'esters vinyliques, d'ester vinylique de l'acide Versatic-10.

**3.** Interpolymères suivant les revendications 1 et 2, caractérisés en ce que l'on utilise l'acide acrylique ou l'acrylamide à titre de composant (d).

**4.** Interpolymères suivant les revendications 1-3, caractérisés en ce qu'ils proviennent des composants (a)-(d), où le composant (d) est constitué d'acide acrylique en une proportion de 0,5 à 2% en poids.

**5.** Interpolymères suivant la revendication 1, caractérisés en ce que les fractions pondérales des composants (a'), (b') et (c') satisfont simultanément aux équations IV-VI, chacune décrivant des compositions possédant des lignes de niveau de performances égales dans un diagramme triangulaire :

$$(IV)\qquad T_g' = 112X_1' - 44X_2' + 50X_3' - 76X_1'.X_2' - 108X_1'.X_3' - 52X_2'.X_3' - 3X_1'.X_2'.X_3'$$

$$(V)\qquad WA' = 2X_1' + 84X_2' + 13X_3' + 84.6X_1'.X_2' + 1.6X_1'.X_3' - 150X_2'.X_3' - 22.8X_1'.X_2'.X_3'$$

(VI) $WS' = 10X_1' + X_2' + 10X_3' - 18X_1'.X_2' - 16X_1'.X_3' - 2X_2'.X_3' + 135X_1'.X_2'.X_3'$

où $T_g'$ possède une valeur qui varie de 0 à 50°C, où WA' possède une valeur d'au plus 25%, et où WS' possède une valeur d'au moins 8, après 24 heures, lors de l'application dans des films de revêtement et le composant (d) est constitué de 1% en poids d'acide acrylique.

**6.** Interpolymères suivant les revendications 1 et 2, caractérisés en ce qu'on peut les obtenir à partir d'un mélange de départ constitué

(a") de 15 à 32% en poids de méthacrylate de méthyle
(b") de 10 à 25% en poids d'acrylate de butyle
(c") de 50 à 65% en poids de VeoVa 9
(d") de 0,5 à 2% en poids d'acide acrylique ou d'acrylamide

**7.** Latex contenant, à titre de constituant polymérique, 30 à 60% en poids d'un interpolymère suivant les revendications 1-6.

**8.** Latex suivant la revendication 7, caractérisé en ce que la proportion du constituant polymérique varie de 40 à 50% en poids.

**9.** Compositions de revêtement comprenant un latex suivant l'une quelconque des revendications 7 et 8 et au moins un pigment.

**10.** Produit interpolymérique solide formé par le séchage physique d'un latex suivant les revendications 7 et 8.

**11.** Produit interpolymérique solide formé par le séchage physique d'un revêtement suivant la revendication 9.

**12.** Poudres de latex pouvant être redispersées, formées par le séchage physique des latex suivant les revendications 7 et 8.

**13.** Composition de revêtement à base de poudres suivant la revendication 12.

**14.** Procédé de préparation de latex, contenant les interpolymères suivant les revendications 1-6, par la polymérisation des mélanges des comonomères à une température qui varie de 20 à 100°C en présence de stabilisateurs supplémentaires, d'un ou plusieurs amorceurs de polymérisation et éventuellement d'agents de tamponnement.

**15.** Procédé suivant la revendication 14, caractérisé en ce que, à titre de stabilisateur, on utilise un agent tensioactif anionique et au moins un agent tensioactif non ionique, en une proportion de 1 à 4% en poids.

**16.** Procédé suivant les revendications 14 et 15, caractérisé en ce que l'on utilise un alkylarylsulfonate en même tant qu'un composé de la formule :

$$R-C_6H_4-O-(CH_2-CH_2-O)_n-H$$

dans laquelle R représente un radical alkyle en $C_6$ à $C_{16}$, et n représente un nombre dont la valeur varie de 3 à 40.

**17.** Procédé suivant l'une quelconque des revendications 14-16, caractérisé en ce que l'on utilise des peroxydes, des hydroperoxydes et/ou des persulfates, à titre d'amorceurs.

**18.** Procédé suivant la revendication 17, caractérisé en ce que l'on utilise le peroxyde d'hydrogène et le persulfate de sodium, d'ammonium ou de potassium en une proportion de 0,4 à 0,7% en poids, sur base du poids du mélange réactionnel.

**19.** Procédé suivant la revendication 14, caractérisé en ce que l'on utilise, à titre d'agent de tamponnement, le borax et un acide organique, de préférence l'acide acétique, ou un bicarbonate ou carbonate de métal alcalin.

**Revendications pour l'Etat contractant suivant : ES**

1. Procédé de préparation d'interpolymères par la polymérisation d'un mélange de comonomères constitué

(a) de méthacrylate de méthyle,
(b) d'acrylate de butyle,
(c) l'ester vinylique de l'acide Versatic-9 (marque de fabrique déposée), représentant un acide carboxylique aliphatique tertiaire, dans lequel le groupement acide contient 9 atomes de carbone, éventuellement en mélange à au plus 30% en poids (de n'importe quel mélange d'esters vinyliques de l'acide versatique) de l'ester vinylique de l'acide Versatic-10 (marque de fabrique déposée), représentant un acide carboxylique aliphatique tertiaire dans lequel le groupement acide contient 10 atomes de carbone,
(d) un monomère stabilisant, choisi dans le groupe formé par l'acide acrylique, l'acide méthacrylique, l'acrylamide, le méthacrylamide, le diacétoneacrylamide et le vinylsulfonate de sodium et leurs mélanges, en une proportion de 0,5 à 5% en poids par rapport au poids total des monomères,

où les pourcentages pondéraux respectifs des composants (a), (b) et (c), calculés par rapport au poids total de la somme des quantités de ces composants, satisfont simultanément aux équations suivantes, chacune décrivant des compositions possédant des courbes de niveau de performances égales dans un diagramme triangulaire (Fig. 1) :

$$\text{(I)} \quad T_g = 112X_1 - 44X_2 + 50X_3 - 76X_1.X_2 - 108X_1.X_3 - 52X_2.X_3 - 3X_1.X_2.X_3$$

$$\text{(II)} \quad WA = 2X_1 + 84X_2 + 13X_3 + 84.6X_1.X_2 + 1.6X_1.X_3 - 150X_2.X_3 - 22.8X_1.X_2.X_3$$

$$\text{(III)} \quad WS = 10X_1 + X_2 + 10X_3 - 18X_1.X_2 - 16X_1.X_3 - 2X_2.X_3 + 135X_1.X_2.X_3$$

où $T_g$ représente la température de transition vitreuse possédant une valeur qui varie de -10°C à 50°C, où WA représente la valeur d'absorption d'eau qui est d'au plus 30% m/m, où WS représente la valeur de la tache d'eau, qui est d'au moins 7, après 24 heures, où $X_1$ représente le pourcentage pondéral du composant (a), $X_2$ représente le pourcentage pondéral du composant (b) et $X_3$ représente le pourcentage pondéral du composant (c), les valeurs de $X_1$, $X_2$ et $X_3$ se situant dans la plage de 5% à 90%, comme calculé sur le poids total des composants (a), (b) et (c).

2. Procédé suivant la revendication 1, caractérisé en ce que l'on utilise, à titre de composant (c), l'ester vinylique de l'acide Versatic-9, qui est éventuellement mélangé à moins de 5% en poids, calculés sur le poids total de ce mélange d'esters vinyliques, d'ester vinylique de l'acide Versatic-10.

3. Procédé suivant les revendications 1 et 2, caractérisé en ce que l'on utilise l'acide acrylique ou l'acrylamide à titre de composant (d).

4. Procédé suivant les revendications 1-3, caractérisé en ce qu'on peut les obtenir à partir des composants (a)-(d), où le composant (d) est constitué d'acide acrylique en une proportion de 0,5 à 2% en poids.

5. Procédé suivant la revendication 1, caractérisé en ce que les fractions pondérales des composants (a'), (b') et (c') satisfont simultanément aux équations IV-VI, chacune décrivant des compositions possédant des lignes de niveau de performances égales dans un diagramme triangulaire :

$$\text{(IV)} \quad T_g = 112X_1' - 44X_2' + 50X_3' - 76X_1'.X_2' - 108X_1'.X_3' - 52X_2'.X_3' - 3X_1'.X_2'.X_3'$$

$$\text{(V)} \quad WA' = 2X_1' + 84X_2' + 13X_3' + 84.6X_1'.X_2' + 1.6X_1'.X_3' - 150X_2'.X_3' - 22.8X_1'.X_2'.X_3'$$

$$\text{(VI)} \quad WS' = 10X_1' + X_2' + 10X_3' - 18X_1'.X_2' - 16X_1'.X_3' - 2X_2'.X_3' + 135X_1'.X_2'.X_3'$$

où $T_g'$ possède une valeur qui varie de 0 à 50°C, où WA' possède une valeur d'au plus 25%, et où WS' possède une valeur d'au moins 8, après 24 heures, lors de l'application dans des films de revêtement et le composant (d) est constitué de 1% en poids d'acide acrylique.

6. Procédé suivant les revendications 1 et 2, caractérisé en ce qu'on peut les obtenir à partir d'un mélange de départ constitué

(a") de 15 à 32% en poids de méthacrylate de méthyle,

(b") de 10 à 25% en poids d'acrylate de butyle,
(c") de 50 à 65% en poids de VeoVa 9,
(d") de 0,5 à 2% en poids d'acide acrylique ou d'acrylamide.

**7.** Procédé de préparation de latex, contenant les interpolymères suivant les revendications 1-6, par la polymérisation des mélanges des comonomères à une température qui varie de 20 à 100°C en présence de stabilisateurs supplémentaires, d'un ou plusieurs amorceurs de polymérisation et éventuellement d'agents de tamponnement.

**8.** procédé suivant la revendication 7, caractérisé en ce que, à titre de stabilisateur, on utilise un agent tensioactif anionique et au moins un agent tensio-actif non ionique, en une proportion de 1 à 4% en poids.

**9.** Procédé suivant les revendications 7 et 8, caractérisé en ce que l'on utilise un alkylarylsulfonate en même tant qu'un composé de la formule :

$$R\text{-}C_6H_4\text{-}O\text{-}(CH_2\text{-}CH_2\text{-}O)_n\text{-}H$$

où R représente un radical alkyle en $C_6$ à $c_{16}$ et n représente un nombre dont la valeur varie de 3 à 40.

**10.** Procédé suivant l'une quelconque des revendications 7 et 8, caractérisé en ce que l'on utilise des peroxydes, des hydroperoxydes et/ou des persulfates, à titre d'amorceurs.

**11.** Procédé suivant la revendication 10, caractérisé en ce que l'on utilise le peroxyde d'hydrogène et le persulfate de sodium, d'ammonium ou de potassium en une proportion de 0,4 à 0,7% en poids, sur base du poids du mélange réactionnel.

**12.** Procédé suivant la revendication 7, caractérisé en ce que l'on utilise, à titre d'agent de tamponnement, le borax et un acide organique, de préférence l'acide acétique, ou un bicarbonate ou carbonate de métal alcalin.

**13.** Procédé de préparation d'un produit interpolymérique solide par le séchage physique d'un latex préparé suivant la revendication 7.

FIG. 1

The shaded area represents the starting comonomer compositions containing:
MMA — BA — VEOVA 9

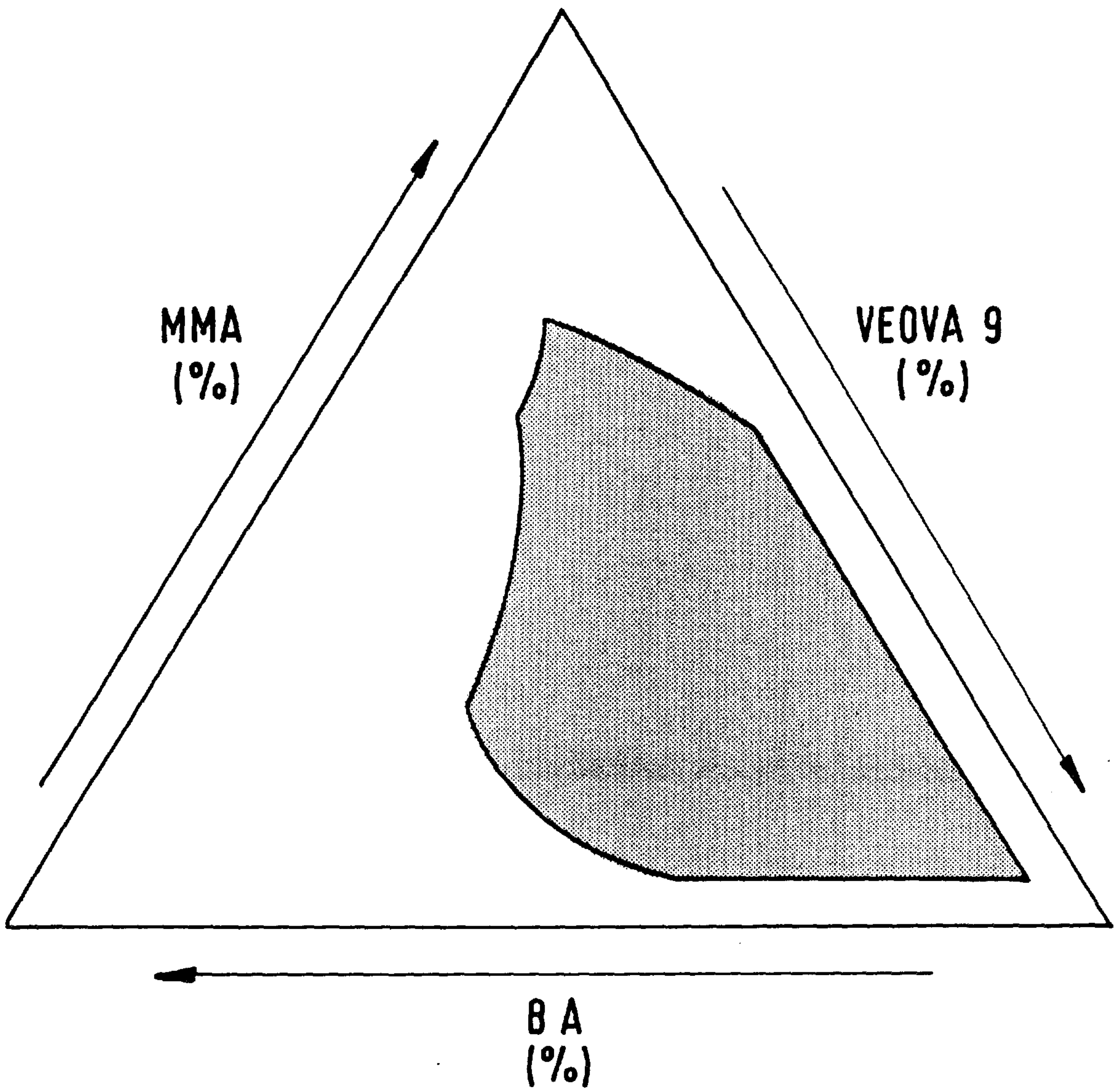

FIG. 2

The shaded area represents the preferred starting comonomer compositions containing:
MMA - BA - VEOVA 9

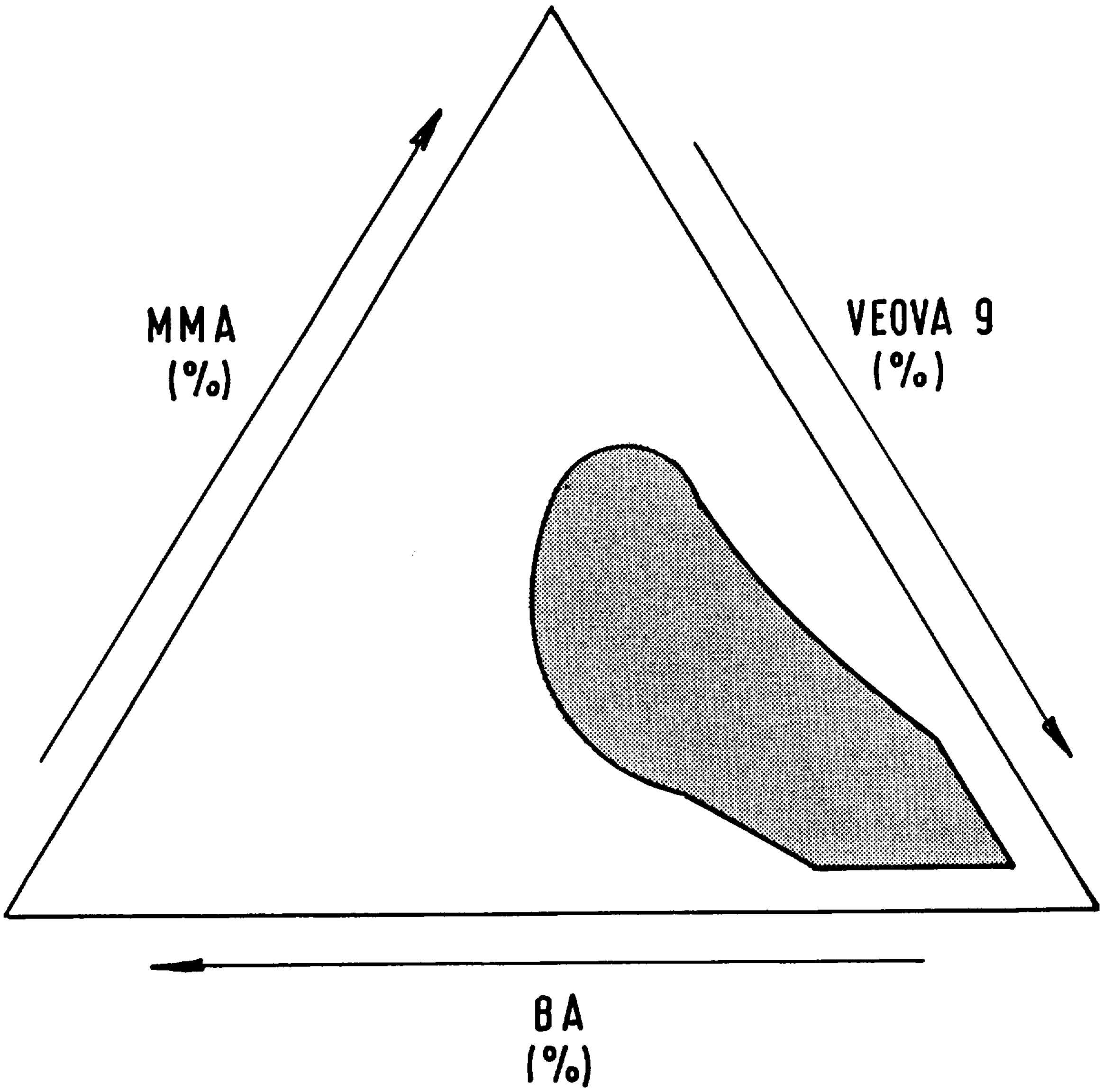

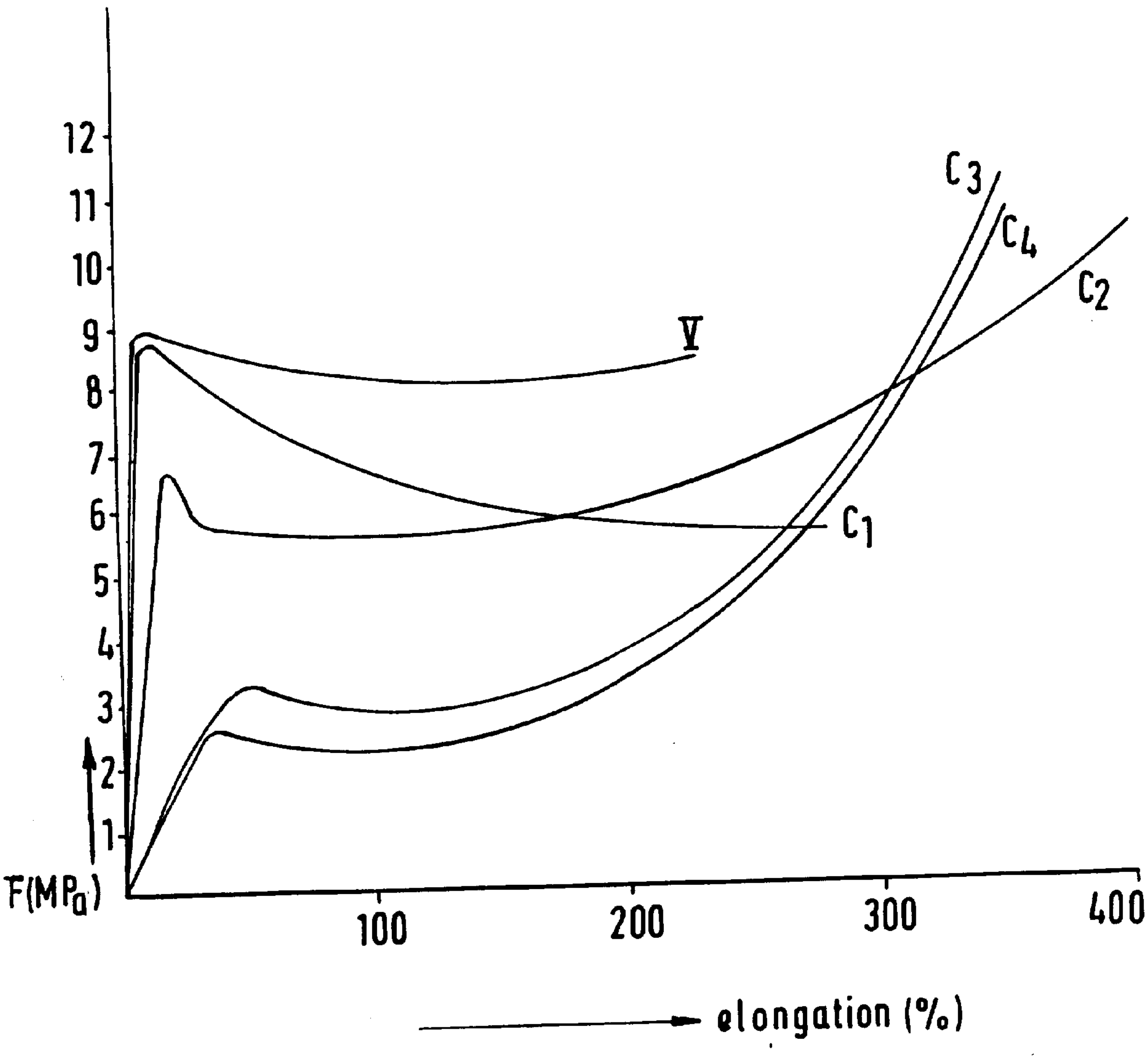
12
11
10
9
8
7
6
5
4
3
2
1
F(MPa)
V
C3
C4
C2
C1
100
200
300
400
elongation (%)

FIG.3